(19) Europäisches Patentamt
European Patent Office
Office européen des brevets

(11) **EP 4 664 051 A1**

(12) **EUROPEAN PATENT APPLICATION**
published in accordance with Art. 153(4) EPC

(43) Date of publication:
**17.12.2025 Bulletin 2025/51**

(21) Application number: **23918889.9**

(22) Date of filing: **30.06.2023**

(51) International Patent Classification (IPC):
**F28F 1/40** (2006.01)    **F28F 13/02** (2006.01)
**F28F 13/18** (2006.01)    **F28D 20/00** (2006.01)

(52) Cooperative Patent Classification (CPC):
**F28D 20/00; F28F 1/40; F28F 13/02; F28F 13/18**

(86) International application number:
**PCT/JP2023/024344**

(87) International publication number:
**WO 2024/166413 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.02.2023 JP 2023016547**

(71) Applicant: **Mitsubishi Materials Corporation
Tokyo 1008117 (JP)**

(72) Inventor: **KAWAI, Shunsuke
Naka-shi, Ibaraki 3110102 (JP)**

(74) Representative: **Hoffmann Eitle
Patent- und Rechtsanwälte PartmbB
Arabellastraße 30
81925 München (DE)**

(54) **WIRE-NET STACKED POROUS BODY AND PIPE PROVIDED WITH POROUS BODY**

(57) A plurality of wire meshes (21, 21) are laminated with an interval in between, and the wire meshes (21, 21) adjacent to each other in a lamination direction are relatively rotated and laminated, when wire mesh lines of the wire meshes laminated (21 are projected onto a projection surface orthogonal to the lamination direction, a proportion of a projection area of the wire mesh lines of the wire meshes 21 occupying the projection surface is 85% or more, and an opening lengths of apertures of the wire mesh are set in a range of 1.2 mm or more and 1.5 mm or less.

FIG. 2B

20

EP 4 664 051 A1

## Description

[Technical Field]

The present invention relates to a wire mesh laminated porous material having a structure in which wire meshes are laminated, and pipes containing a porous material in which this wire mesh laminated porous material is disposed.

Priority is claimed on Japanese Patent Application No. 2023-016547, filed February 7, 2023, the content of which is incorporated herein by reference.

[Background Art]

In the related art, a metal porous material has a high specific surface area and a high opening porosity, and thus is used for a filter, an electrode assembly, a sound attenuation member, a member for heat exchange, and the like.

Here, for a metal porous material used as a matrix material in a cold accumulator or a waste heat recovery device such as a Stirling cycle device, a metal porous material having a low pressure loss and excellent heat transfer performance is required.

In a heat exchanger mounted on a pulse tube refrigerator, various structures for improving heat exchange efficiency such as cooling while increasing a flow-straightening effect of a working gas in a heat exchanger using a porous material in which wire meshes or punched plates, on which circular or square through holes are arranged and punched, are laminated.

For example, Patent Document 1 discloses a heat exchanger for improving a flow-straightening capability of a working gas and a heat exchange capability, by using a bonded porous material obtained by alternately laminating a porous material such as a metallic wire mesh and a metallic ring, and diffusion bonding these by pressurization.

In addition, Patent Document 2 discloses a technology related to a heat exchanger of a laminate in which wire meshes having different mesh sizes and material types are laminated on one another and wire mesh contact parts are diffusion bonded.

Further, Patent Document 3 proposes a technology for reducing a variation in a flow-straightening effect of a working gas and improving cooling efficiency by inserting a spacer for maintaining a gap between wire meshes to dispose the wire meshes with a gap.

[Citation List]

[Patent Documents]

[Patent Document 1]
Japanese Unexamined Patent Application, First Publication No. 2005-030704
[Patent Document 2]
Japanese Unexamined Patent Application, First Publication No. 2011-149601
[Patent Document 3]
Japanese Unexamined Patent Application, First Publication No. 2014-228171

[Summary of Invention]

[Technical Problem]

Meanwhile, as disclosed in Patent Documents 1 to 3, in a heat exchanger using a wire mesh laminated porous material having a structure in which wire meshes or the like are laminated, heat resistance of a bonding part can be reduced by sufficient adherence by diffusion bonding by pressurization. However, depending on a method for laminating the wire meshes, or a method for laminating without particularly describing an arrangement state, a fluid passes through an inside of a gap of the wire mesh without frictional resistance, and this can realize a low pressure loss, however, there was a concern that the heat exchanger has a poor heat transfer capability.

On the other hand, in a case where the gap between the wire meshes is extremely small, a high heat transfer capability can be expected by excellent heat exchange with wire mesh lines of the wire mesh when a working gas passes through. However, there was a concern that a pressure loss excessively increases due to bifurcation associated with frictional resistance of a working gas flow when colliding with the wire mesh lines.

In addition, it has not been examined how much a slight position deviation of the wire mesh arrangement at the time of laminating changes performance such as a pressure loss and a heat transfer rate, and there was a concern that the position deviation of the wire mesh arrangement at the time of laminating leads to the performance change.

The present invention has been made based on the above circumstances, and an objective thereof is to provide a wire mesh laminated porous material having sufficiently high heat exchange performance and capable of suppressing a pressure loss of a fluid flowing through an inside to be low, and pipes containing a porous material.

[Solution to Problem]

In order to solve such problems to achieve the objective, in a wire mesh laminated porous material of Aspect 1 of the present invention, a plurality of wire meshes are laminated with an interval in between, and the wire meshes adjacent to each other in a lamination direction are relatively rotated and laminated, when wire mesh lines of the wire meshes laminated are projected onto a projection surface orthogonal to the lamination direction, a proportion of a projection area of the wire mesh lines of the wire meshes occupying the projection surface is 85% or more, and an opening lengths of apertures of the wire mesh are set in a range of 1.2 mm or more and 1.5 mm or less.

According to the wire mesh laminated porous material of Aspect 1 of the present invention, the plurality of wire meshes are laminated with an interval in between, and the wire meshes adjacent to each other in the lamination direction are relatively rotated and laminated such that the proportion of the projection area of the wire mesh lines of the wire meshes occupying the projection surface is 85% or more, when the wire mesh lines of the wire meshes are projected onto the projection surface orthogonal to the lamination direction. Accordingly, a fluid passing through an opening part of the wire mesh collides with the wire mesh line of the wire mesh on a downstream side, and high thermal performance can be ensured. In addition, the opening lengths of the apertures are set in a range of 1.2 mm or more and 1.5 mm or less. Accordingly, a sufficient flowing path can be ensured while maintaining excellent heat conduction between the fluid flowing through and the wire mesh line, and a pressure loss can be reliably suppressed to be low.

In the wire mesh laminated porous material of Aspect 2 of the present invention, in the wire mesh laminated porous material of any one of Aspect 1 of the present invention, the interval between the wire meshes adjacent to each other in the lamination direction is in a range of 0.15 mm or more and 0.20 mm or less.

According to the wire mesh laminated porous material of Aspect 2 of the present invention, the interval between the wire meshes adjacent to each other in the lamination direction is set in a range of 0.15 mm or more and 0.20 mm or less. Accordingly, it is possible to realize weight reduction and size reduction, and reliably achieve a flow-straightening effect of a fluid.

In the wire mesh laminated porous material of Aspect 3 of the present invention, in the wire mesh laminated porous material of Aspect 1 or 2 of the present invention, the wire meshes laminated have the same aperture and wire diameter.

According to the wire mesh laminated porous material of Aspect 3 of the present invention, the wire meshes laminated have the same aperture and wire diameter. Accordingly, by rotating and laminating the adjacent wire meshes, a fluid passing through an opening part of the wire mesh reliably collides with a wire mesh line of an adjacent wire mesh, and high thermal performance can be ensured. In addition, it is possible to comparatively easily manufacture this wire mesh laminated porous material.

In pipes containing a porous material of Aspect 4 of the present invention, the wire mesh laminated porous material according to any one of Aspects 1 to 3 of the present invention is disposed inside a pipe body, and the wire mesh laminated porous material is disposed so that the wire meshes are laminated in an extension direction of the pipe body, and an outer peripheral surface of the wire mesh laminated porous material and an inner peripheral surface of the pipe body are bonded to each other.

According to the pipes containing a porous material of Aspect 4 of the present invention, the wire mesh laminated porous material according to any one of Aspects 1 to 3 of the present invention is disposed inside the pipe body. Accordingly, by causing a fluid flow through the pipe body, it is possible to obtain high thermal performance and suppress a pressure loss of the fluid to be low.

[Advantageous Effects of Invention]

According to the present invention, it is possible to provide a wire mesh laminated porous material having sufficiently high heat exchange performance and capable of suppressing a pressure loss of a fluid flowing through an inside to be low, and pipes containing a porous material.

[Brief Description of Drawings]

FIG. 1 is a schematic explanatory view of pipes containing a porous material according to an embodiment of the present invention.

FIG. 2A is a schematic explanatory view of a wire mesh laminated porous material included in pipes containing a porous material according to an embodiment of the present invention and is a cross-sectional view taken along a lamination direction of a wire mesh.

FIG. 2B is a schematic explanatory view of a wire mesh laminated porous material included in pipes containing a porous material according to an embodiment of the present invention and is a plan view of laminated wire meshes seen in a lamination direction.

FIG. 3 is a schematic explanatory view of a wire mesh configuring a wire mesh laminated porous material according to an embodiment of the present invention.

FIG. 4 is an explanatory view showing a rotation angle between wire meshes adjacent to each other in a lamination direction in a wire mesh laminated porous material according to an embodiment of the present invention.

[Description of Embodiments]

Hereinafter, a wire mesh laminated porous material and pipes containing a porous material according to an embodiment of the present invention will be described with reference to the accompanying drawings.

The embodiments shown below are specifically described for better understanding of the gist of the invention, and do not limit the present invention unless otherwise specified.

The wire mesh laminated porous material and the pipes containing a porous material according to the present embodiment are used as, for example, a heat exchanger.

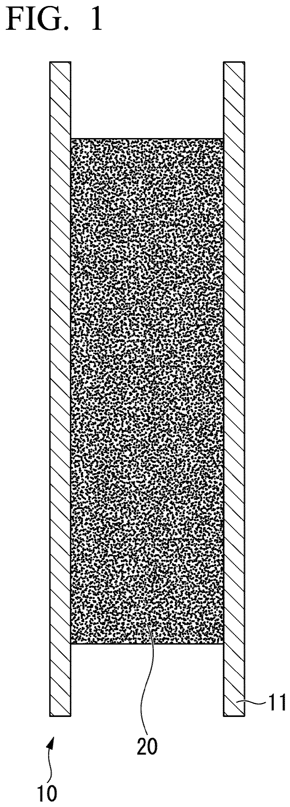

As shown in FIG. 1, a pipe 10 containing a porous material according to the present embodiment includes a pipe body 11, and a wire mesh laminated porous material 20 according to the present embodiment disposed inside the pipe body 11.

Here, in the present embodiment, as shown in FIG. 1, the wire mesh laminated porous material 20 is filled in the pipe body 11, and an outer peripheral surface of the wire mesh laminated porous material 20 and an inner peripheral surface of the pipe body 11 are bonded to each other.

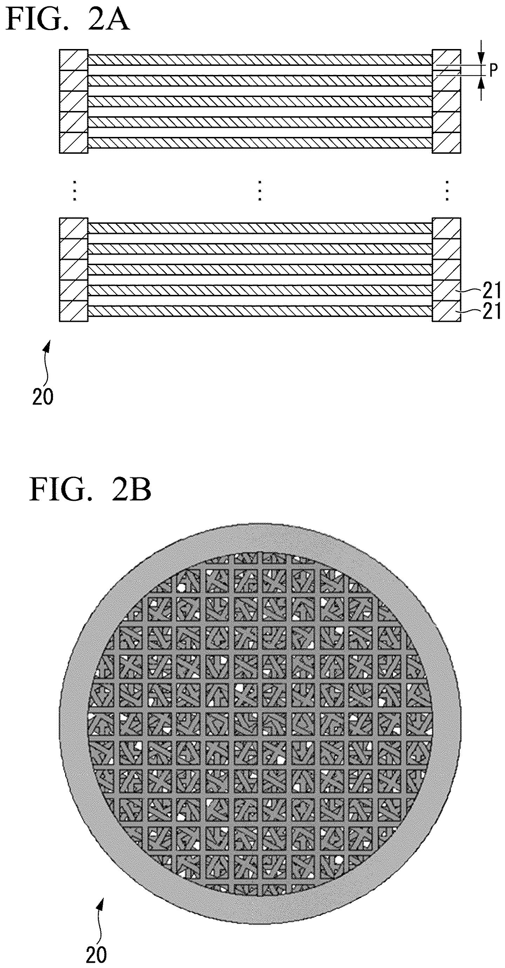

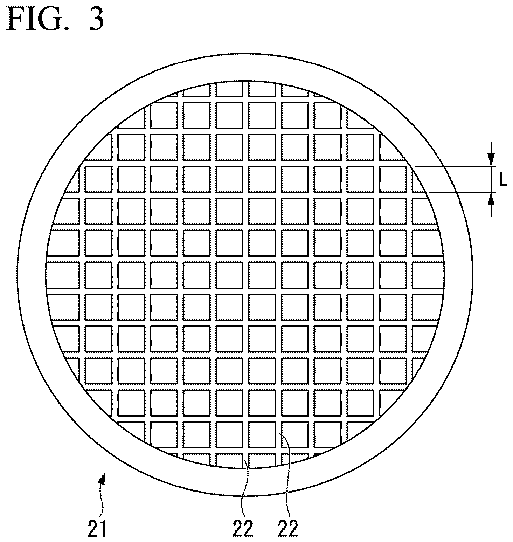

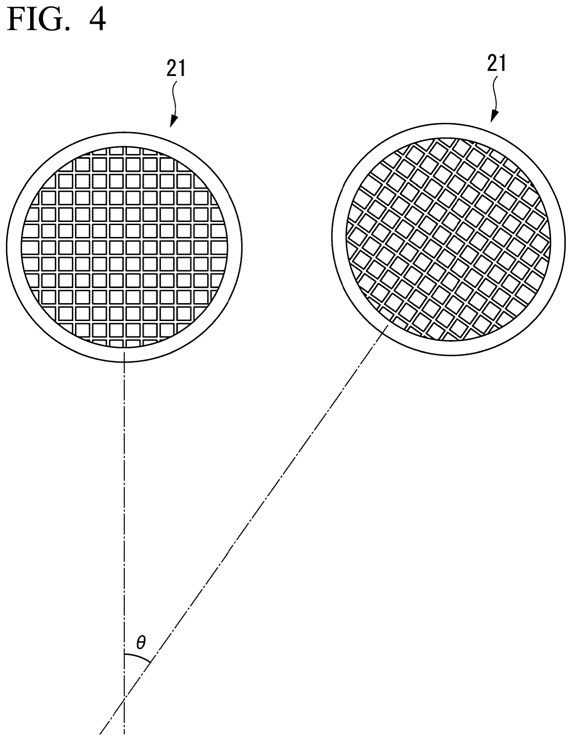

In the wire mesh laminated porous material 20 according to the present embodiment, as shown in FIG. 2A, wire meshes 21, ..., and 21 are provided with an interval in between, and adjacent wire meshes 21 and 21 are rotated and laminated. As shown in FIG. 3, in one wire mesh 21, wire mesh lines 22 are woven with an interval in between. In addition, a relationship between a rotation angle θ between the adjacent wire meshes 21 and 21 and the wire mesh structure is shown in FIG. 4.

Although not particularly limited, the interval of the wire mesh lines 22 may be a constant interval. The wire mesh lines 22 and 22 woven in one wire mesh 21 may cross each other at approximately 90°. A shape of an aperture of the wire mesh 22 may be substantially a square.

As shown in FIG. 2B, in a case where the wire mesh lines 22 of the wire meshes 21 in the wire mesh laminated porous material 20 are projected onto a projection surface orthogonal to a lamination direction, a proportion of a projection area of the wire mesh lines 22 of the wire meshes 21 occupying the projection surface is set to 85% or more.

Here, in the pipe 10 containing a porous material according to the present embodiment, the wire mesh laminated porous material 20 is disposed so that the wire meshes are laminated in an extension direction of the pipe body 11.

Therefore, in the pipe 10 containing a porous material according to the present embodiment, when seen in the extension direction of the pipe body 11, a proportion of the wire mesh lines 22 of the wire meshes 21 occupying an opening surface of the pipe body 11 is set to 85% or more.

As described above, since the proportion of the wire mesh lines 22 of the wire meshes 21 occupying the opening surface of the pipe body 11 is set to 85% or more, a fluid (a liquid or a gas) flowing through an inside of the pipe body 11 efficiently collides with the wire mesh lines 22 of the wire meshes 21, and heat exchange performance is improved.

Here, in the present embodiment, in order to cause the fluid to further efficiently collide with the wire mesh lines 22, the proportion of the projection area of the wire mesh lines 22 of the wire meshes 21 occupying the projection surface is preferably set to 97% or more. An upper limit of the proportion of the projection area of the wire mesh lines 22 of the wire meshes 21 occupying the projection surface is not particularly limited, and may be 100%, but is more preferably 99% or less.

As shown in FIG. 3, in the wire meshes 21 configuring the wire mesh laminated porous material 20 according to the present embodiment, the wire mesh lines 22 are woven with an interval in between, and an opening lengths L of apertures of the wire mesh 21 are set in a range of 1.2 mm or more and 1.5 mm or less.

In the present embodiment, as shown in FIG. 4, a square opening part is formed by the wire mesh lines 22, and the opening lengths L of the apertures of the wire mesh 21 are set as a length of one side of a square formed by the opening part.

Here, the square shape of the opening part is merely an example, and the opening part may be rectangular or polygonal. In this case, a hydraulic equivalent diameter calculated by the shape is preferably defined and used as the opening lengths L. For example, the hydraulic equivalent diameter C = (2ab)/(a + b) of a rectangle having a long side "a" and a short side "b" is set as the opening lengths L.

In a case where the opening lengths L of the apertures of the wire mesh 21 are set to 1.2 mm or more, a sufficient flowing path is ensured, and it is possible to reliably suppress an increase of a pressure loss of a fluid flowing through the inside of the pipe body 11. On the other hand, in a case where the opening lengths L of the apertures of the wire mesh 21 are set to 1.5 mm or less, it is possible to improve heat exchange performance by efficient collision with the wire mesh lines 22, while maintaining excellent heat conduction between the fluid flowing through and the wire mesh lines 22.

In addition, in the wire mesh laminated porous material 20 according to the present embodiment, as shown in FIG. 4, the wire meshes 21 and 21 are laminated by being rotated at a rotation angle θ between the wire meshes 21 and 21 adjacent to each other in the lamination direction.

The rotation angle θ is not limited to an upper limit and a lower limit, as long as the lamination can be performed so that the proportion of the wire mesh lines 22 of the wire meshes 21 occupying the opening surface of the pipe body 11 is set to 85% or more. The rotation angle θ may be set from a desired number of wire meshes to be laminated and a length of the pipe body 11, so that the proportion of the wire mesh lines 22 of the wire meshes 21 occupying the opening surface of the pipe body 11 is set to 85% or more.

In a case where the rotation angle θ is set so that the proportion of the wire mesh lines 22 of the wire meshes 21 occupying the opening surface of the pipe body 11 is set to 85% or more, the fluid flowing through more efficiently collides with the wire mesh lines 22, thereby improving heat exchange performance.

When the rotation angle θ is extremely small, it is difficult to control the rotation angle at the time of laminating the wire meshes 21. On the other hand, regarding the upper limit of the rotation angle θ, in consideration that an angle has periodicity from 0° to 360° and the rotation angle θ shows symmetry of the wire mesh lines 22 configuring the wire mesh 21, the rotation angle θ may be set from the desired number of wire meshes to be laminated and the length of the pipe body 11, so that the proportion of the wire mesh lines 22 of the wire meshes 21 occupying the opening surface of the pipe body 11 is set to 85% or more. For example, the wire mesh lines 22 of the wire mesh 21 shown in FIG. 4 is an example having rotational symmetry of θ = 90°.

In consideration of the above, the rotation angle θ is not particularly limited, but is preferably set in a range of 10° or more and 60° or less.

In addition, in the wire mesh laminated porous material 20 according to the present embodiment, as shown in FIG. 2A, a interval P between the wire meshes 21 and 21 adjacent to each other in the lamination direction is preferably in a range of 0.1 mm or more and 0.6 mm or less.

In a case where the interval P between the wire meshes 21 and 21 adjacent to each other in the lamination direction is 0.1 mm or more, the fluid flowing through is rectified between the wire mesh and the wire mesh, and a flow becomes uniform. Therefore, further improvement of heat exchange performance can be realized. On the other hand, in a case where the interval P between the wire meshes 21 and 21 adjacent to each other in the lamination direction is 0.6 mm or less, an increase of a lamination length is suppressed, and the wire mesh laminated porous material 20 can be reduced in size.

Here, in order to realize weight reduction and size reduction, and reliably achieve a flow-straightening effect of the fluid, the interval P between the wire meshes 21 and 21 adjacent to each other in the lamination direction is preferably set in a range of 0.15 mm or more and 0.20 or less.

The wire meshes 21 and 21 configuring the wire mesh laminated porous material 20 according to the present embodiment preferably have the same aperture and the same line diameter of the wire mesh line 22.

That is, in the present embodiment, by rotating and laminating the wire meshes 21 and 21 having the same structure, a wire mesh line 22 of another wire mesh 21 is disposed in a region of an opening part of one wire mesh 21 when seen in the lamination direction, and the fluid flowing through easily comes into contact with the wire mesh line 22.

Here, the line diameter of the wire mesh line 22 is not particularly limited, and is preferably set in a range of 0.1 mm or more and 0.5 mm or less.

In addition, in the present embodiment, a material configuring the pipe body 11 and the wire mesh 20 is not particularly limited, and may be suitably selected according to the purpose.

For example, in a case of being used as a heat exchanger, the pipe body and the wire mesh may be configured with a metal having high heat conduction (for example, copper or a copper alloy, or aluminum or an aluminum alloy), or the like. In addition, for the purpose requiring corrosion resistance, the pipe body and the wire mesh are preferably configured with a stainless steel alloy, titanium, a titanium alloy, or the like.

The wire mesh laminated porous material 20 according to the present embodiment is manufactured by rotating and laminating the plurality of wire meshes 21. A method for fixing the laminated wire meshes 21 is not particularly limited, and it is preferable to use existing methods according to the purpose and the material. In addition, in order to adjust the interval P between the adjacent wire meshes 21 and 21, the lamination may be performed by disposing a spacer between the wire mesh and the wire mesh.

Furthermore, in recent years, since a 3D printing or additive manufacturing technology has been developed, the wire mesh laminated porous material 20 having a structure in which wire meshes are laminated may be molded by a 3D printer.

According to the wire mesh laminated porous material 20 and the pipes containing a porous material according to the present embodiment having the above configuration, the wire meshes 21 and 21 are provided with an interval in between, and adjacent wire meshes 21 and 21 are relatively rotated and laminated. Accordingly, a fluid passing through the opening part of the wire mesh 21 efficiently collides with the wire mesh line 22 of the wire mesh 21 on a downstream side, thereby ensuring high thermal performance. In addition, it is possible to obtain a flow-straightening effect of the fluid in a space between the laminated wire meshes 21 and wire mesh 21, and it is possible to make the flow of the fluid uniform.

When the wire mesh lines 22 of the wire meshes 21 and 21 in the wire mesh laminated porous material 20 are projected onto the projection surface orthogonal to the lamination direction, the rotation and the lamination are performed so that the proportion of the projection area of the wire mesh lines 22 of the wire meshes 21 and 21 occupying the projection surface is 85% or more. Accordingly, the fluid flowing through efficiently collides with the wire mesh line 22, thereby improving thermal performance.

The opening lengths L of the apertures of the wire mesh 21 are set in a range of 1.2 mm or more and 1.5 mm or less. Accordingly, a sufficient flowing path can be ensured while maintaining excellent heat conduction between the fluid flowing through and the wire mesh line, and the pressure loss can be reliably suppressed to be low.

In the present embodiment, in a case where the interval between the wire meshes 21 and 21 adjacent to each other in the lamination direction is set in a range of 0.15 mm or more and 0.20 mm or less, it is possible to realize size reduction of the wire mesh laminated porous material 20, reliably achieve a flow-straightening effect of a fluid, and make the flow of the fluid more uniform.

In the present embodiment, in a case where the aperture of the wire meshes laminated 21 and the line diameter of the wire mesh line 22 are the same as each other, by rotating and laminating the adjacent wire meshes, the fluid passing through the opening part of the wire mesh 21 reliably collides with the wire mesh line 22 of the adjacent wire mesh 21, and high thermal performance can be ensured. In addition, it is possible to comparatively easily manufacture the wire mesh laminated porous material 20.

Hereinabove, the embodiment of the present invention has been described. However, the present invention is not limited thereto and can be suitably modified without departing from the technical idea of the invention.

[Examples]

Hereinafter, results of experiments for confirmation performed to confirm the effects of the present invention will be described.

First, a cylinder (inner diameter: 18 mm, outer diameter: 21 mm, and length: 25 mm) formed of aluminum (A1050) was prepared as a pipe body.

The inside of this pipe body was filled with a wire mesh laminated porous material formed of wire meshes (formed of aluminum (A1050)) shown in Table 1, and the pipe body and the wire mesh laminated porous material were bonded by sintering.

Here, the wire mesh laminated porous material was disposed such that a porosity inside pipes containing a porous material was set to 80%.

A temperature of an outer wall face of the pipes containing a porous material was set to 0°C, air at 200°C was allowed to flow into the pipes containing a porous material, and a pressure loss amount and a heat transfer rate in the pipes containing a porous material were measured.

A friction factor f was calculated from the pressure loss amount and a Nusselt number Nu was calculated from the heat transfer rate, and a thermal performance factor (TPF) defined by the following equation was evaluated. When the TPF is high, the pressure loss amount is low and excellent heat exchange performance is obtained.

$$TPF = Nu/f^{1/3}$$

[Table 1]

| | | Opening length of aperture [mm] | Rotation angle of wire mesh [°] | Lamination interval of wire meshes [mm] | Proportion of projection area [%] | Evaluation | | |
|---|---|---|---|---|---|---|---|---|
| | | | | | | Pressure loss [kPa/mm] | Heat transfer rate [W/(m²·K)] | TPF |
| Examples of present invention | 1 | 1.5 | 10 | 0.15 | 98.71 | $8.214 \times 10^{-3}$ | $4.379 \times 10^{3}$ | 806.9 |
| | 2 | 1.2 | 10 | 0.20 | 100.00 | $8.971 \times 10^{-3}$ | $4.355 \times 10^{3}$ | 780.6 |
| | 3 | 1.2 | 30 | 0.20 | 97.44 | $8.439 \times 10^{-3}$ | $4.341 \times 10^{3}$ | 793.8 |
| | 4 | 1.2 | 45 | 0.20 | 86.58 | $8.494 \times 10^{-3}$ | $4.329 \times 10^{3}$ | 789.8 |
| Comparative Example | 1 | 1.2 | 60 | 0.20 | 74.45 | $6.423 \times 10^{-3}$ | $3.611 \times 10^{3}$ | 717.0 |
| | 2 | 1.5 | 30 | 0.15 | 68.12 | $5.794 \times 10^{-3}$ | $3.563 \times 10^{3}$ | 730.8 |
| | 3 | 1.5 | 45 | 0.15 | 51.09 | $2.575 \times 10^{-3}$ | $2.069 \times 10^{3}$ | 540.3 |
| | 4 | 1.5 | 60 | 0.15 | 68.12 | $5.797 \times 10^{-3}$ | $3.563 \times 10^{3}$ | 730.7 |
| | 5 | 0.9 | 10 | 0.40 | 99.37 | $7.622 \times 10^{-3}$ | $3.600 \times 10^{3}$ | 674.0 |
| | 6 | 0.9 | 30 | 0.40 | 85.01 | $7.760 \times 10^{-3}$ | $3.623 \times 10^{3}$ | 674.4 |
| | 7 | 0.9 | 45 | 0.40 | 68.94 | $5.657 \times 10^{-3}$ | $3.139 \times 10^{3}$ | 644.5 |
| | 8 | 0.9 | 60 | 0.40 | 85.01 | $7.762 \times 10^{-3}$ | $3.622 \times 10^{3}$ | 673.9 |
| | 9 | 1.8 | 10 | 0.10 | 96.45 | $7.546 \times 10^{-3}$ | $3.730 \times 10^{3}$ | 701.2 |
| | 10 | 1.8 | 30 | 0.10 | 62.12 | $4.647 \times 10^{-3}$ | $2.805 \times 10^{3}$ | 611.0 |
| | 11 | 1.8 | 45 | 0.10 | 46.18 | $1.894 \times 10^{-3}$ | $1.541 \times 10^{3}$ | 436.8 |
| | 12 | 1.8 | 60 | 0.10 | 62.12 | $4.646 \times 10^{-3}$ | $2.804 \times 10^{3}$ | 610.8 |
| | 13 | 0.7 | 0 | 0.50 | 50.44 | $3.850 \times 10^{-3}$ | $2.800 \times 10^{3}$ | 649.9 |
| | 14 | 0.7 | 10 | 0.50 | 99.79 | $9.350 \times 10^{-3}$ | $3.730 \times 10^{3}$ | 656.9 |
| | 15 | 0.7 | 30 | 0.50 | 90.84 | $9.740 \times 10^{-3}$ | $3.800 \times 10^{3}$ | 660.3 |
| | 16 | 0.7 | 45 | 0.50 | 75.63 | $7.960 \times 10^{-3}$ | $3.520 \times 10^{3}$ | 652.1 |
| | 17 | 0.7 | 60 | 0.50 | 90.84 | $9.730 \times 10^{-3}$ | $3.810 \times 10^{3}$ | 661.5 |
| | 18 | 0.5 | 0 | 0.60 | 61.17 | $9.510 \times 10^{-3}$ | $4.060 \times 10^{3}$ | 713.0 |
| | 19 | 0.5 | 10 | 0.60 | 100.00 | $1.860 \times 10^{-2}$ | $4.840 \times 10^{3}$ | 684.2 |
| | 20 | 0.5 | 30 | 0.60 | 96.33 | $1.880 \times 10^{-2}$ | $4.880 \times 10^{3}$ | 688.1 |
| | 21 | 0.5 | 45 | 0.60 | 84.89 | $1.720 \times 10^{-2}$ | $4.740 \times 10^{3}$ | 687.4 |
| | 22 | 0.5 | 60 | 0.60 | 96.33 | $1.880 \times 10^{-2}$ | $4.880 \times 10^{3}$ | 687.7 |

In Comparative Examples 1 to 4, the opening lengths of the apertures of the wire mesh were in a range of 1.2 mm or more and 1.5 mm or less, however, the proportion of the projection area of the wire mesh lines of the wire meshes occupying the projection surface was less than 85%, and the thermal performance factor was decreased.

In Comparative Examples 5 to 8, the opening lengths of the apertures of the wire mesh were as small as 0.9 mm, and the thermal performance factor was decreased regardless of the proportion of the projection area of the wire mesh lines of the wire meshes occupying the projection surface.

In Comparative Examples 9 to 12, the opening lengths of the apertures of the wire mesh were as great as 1.8 mm, and the thermal performance factor was decreased regardless of the proportion of the projection area of the wire mesh lines of the wire meshes occupying the projection surface.

In Comparative Examples 13 to 17, the opening lengths of the apertures of the wire mesh were as small as 0.7 mm, and the thermal performance factor was decreased regardless of the proportion of the projection area of the wire mesh lines of the wire meshes occupying the projection surface.

In Comparative Examples 18 to 22, the opening lengths of the apertures of the wire mesh were as small as 0.5 mm, and the thermal performance factor was decreased regardless of the proportion of the projection area of the wire mesh lines of the wire meshes occupying the projection surface.

In contrast, in Examples of the present invention 1 to 4, the opening lengths of the apertures of the wire mesh were in a range of 1.2 mm or more and 1.5 mm or less, and the proportion of the projection area of the wire mesh lines of the wire meshes occupying the projection surface was 85% or more. Therefore, the thermal performance factor was sufficiently high and a thermo-hydraulic performance was excellent compared to the comparative examples described above.

From the above, according to Examples of the present invention, it was confirmed that it is possible to provide a wire mesh laminated porous material having sufficiently high heat exchange performance and capable of suppressing a pressure loss of a fluid flowing through an inside to be low, and pipes containing a porous material.

[Industrial Applicability]

It is possible to provide a wire mesh laminated porous material having sufficiently high heat exchange performance and capable of suppressing a pressure loss of a fluid flowing through an inside to be low, and pipes containing a porous material.

[Reference Signs List]

10: Pipes containing porous material
11: Pipe body
20: Wire mesh laminated porous material
21: Wire mesh
22: Wire mesh line

**Claims**

1. A wire mesh laminated porous material,
   wherein a plurality of wire meshes are laminated with an interval in between, and the wire meshes adjacent to each other in a lamination direction are relatively rotated and laminated,

   when wire mesh lines of the wire meshes laminated are projected onto a projection surface orthogonal to the lamination direction, a proportion of a projection area of the wire mesh lines of the wire meshes occupying the projection surface is 85% or more, and
   opening lengths of apertures of the wire meshes are set in a range of 1.2 mm or more and 1.5 mm or less.

2. The wire mesh laminated porous material according to Claim 1,
   wherein the interval between the wire meshes adjacent to each other in the lamination direction is in a range of 0.15 mm or more and 0.20 mm or less.

3. The wire mesh laminated porous material according to Claim 1,
   wherein the wire meshes laminated have the same aperture and wire diameter.

4. Pipes containing a porous material,
   wherein the wire mesh laminated porous material according to any one of Claims 1 to 3 is disposed inside a pipe body, and
   the wire mesh laminated porous material is disposed so that the wire meshes are laminated in an extension direction of the pipe body.

FIG. 1

# FIG. 2A

# FIG. 2B

FIG. 3

# FIG. 4

## INTERNATIONAL SEARCH REPORT

| International application No. |
| --- |
| **PCT/JP2023/024344** |

**A.     CLASSIFICATION OF SUBJECT MATTER**

*F28F 1/40*(2006.01)i; *F28F 13/02*(2006.01)i; *F28F 13/18*(2006.01)i; *F28D 20/00*(2006.01)i
FI:    F28F1/40 Q; F28D20/00 A; F28F13/02 D; F28F13/18 Z

According to International Patent Classification (IPC) or to both national classification and IPC

**B.     FIELDS SEARCHED**

Minimum documentation searched (classification system followed by classification symbols)

F28F1/40; F28F13/02; F28F13/18; F28D20/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| Y | JP 1-244285 A (AISIN SEIKI KABUSHIKI KAISHA) 28 September 1989 (1989-09-28)<br>p. 1, lower left column, line 14 to p. 2, lower right column, line 14, fig. 1-4 | 1-4 |
| Y | JP 49-21330 B1 (N.V. PHILIPS' GLOEILAMPENFABRIEKEN) 31 May 1974 (1974-05-31)<br>p. 1, left column, line 29 to p. 3, right column, line 37, fig. 1a-6 | 1-4 |
| Y | JP 62-233688 A (AISIN SEIKI KABUSHIKI KAISHA) 14 October 1987 (1987-10-14)<br>p. 1, lower left column, line 10 to p. 2, lower right column, line 13, fig. 1-6 | 1-4 |
| A | JP 8-247671 A (NKK CORP.) 27 September 1996 (1996-09-27)<br>paragraphs [0001]-[0027], fig. 1-5 | 1-4 |
| A | JP 7-293334 A (SANYO ELECTRIC CO., LTD.) 07 November 1995 (1995-11-07)<br>paragraphs [0001]-[0025], fig. 1-5 | 1-4 |
| A | JP 2000-9356 A (AISIN SEIKI KABUSHIKI KAISHA) 14 January 2000 (2000-01-14)<br>paragraphs [0001]-[0072], fig. 1-11 | 1-4 |

☐ Further documents are listed in the continuation of Box C.          ☑ See patent family annex.

| | |
| --- | --- |
| * Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **25 July 2023** | **08 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/024344**

| Patent document cited in search report | | | Publication date (day/month/year) | Patent family member(s) | | | Publication date (day/month/year) |
|---|---|---|---|---|---|---|---|
| JP | 1-244285 | A | 28 September 1989 | (Family: none) | | | |
| JP | 49-21330 | B1 | 31 May 1974 | US | 3742578 | A | |
| | | | | column 1, line 8 to column 5, line 37, fig. 1a-6 | | | |
| | | | | GB | 1277773 | A | |
| | | | | DE | 1937414 | A | |
| | | | | FR | 2015704 | A | |
| | | | | BE | 737461 | A | |
| | | | | CH | 510243 | A | |
| | | | | NL | 6811589 | A | |
| | | | | AT | 296691 | B | |
| | | | | SE | 351719 | B | |
| | | | | FI | 53871 | B | |
| | | | | DK | 127607 | B | |
| JP | 62-233688 | A | 14 October 1987 | (Family: none) | | | |
| JP | 8-247671 | A | 27 September 1996 | (Family: none) | | | |
| JP | 7-293334 | A | 07 November 1995 | (Family: none) | | | |
| JP | 2000-9356 | A | 14 January 2000 | (Family: none) | | | |

Form PCT/ISA/210 (patent family annex) (January 2015)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023016547 A
- JP 2005030704 A
- JP 2011149601 A
- JP 2014228171 A